Europäisches Patentamt

European Patent Office

Office européen des brevets

(19)

(11) Publication number : **0 612 019 A2**

## (12) EUROPEAN PATENT APPLICATION

(21) Application number : **94301081.9**

(22) Date of filing : **15.02.94**

(51) Int. Cl.5 : **G06F 15/21,** G06F 15/02

(30) Priority : **18.02.93 US 19139**

(43) Date of publication of application :
**24.08.94 Bulletin 94/34**

(84) Designated Contracting States :
**DE FR GB**

(71) Applicant : **LASER DATA TECHNOLOGY, Inc.**
**9375 Dielman Industrial Court**
**St. Louis, Missouri 63132 (US)**

(72) Inventor : **Ross, Monte**
**9375 Dielman Industrial Court**
**St. Louis, Missouri 63132 (US)**
Inventor : **Peterson, Mark L.**
**9375 Dielman Industrial Court**
**St. Louis, Missouri 63132 (US)**
Inventor : **Missler, Leonard R.**
**9375 Dielman Industrial Court**
**St. Louis, Missouri 63132 (US)**

(74) Representative : **Freeman, Jacqueline Carol**
**W.P. THOMPSON & CO.**
**Celcon House**
**289-293 High Holborn**
**London WC1V 7HU (GB)**

(54) Coupon information system.

(57) A hand-held data processing device for storing data in a compressed form is disclosed. The device includes a keyboard for entering input data and a data compressor for compressing the input data. The stored compressed data is searched and retrieved as a function of the compressed input data. The retrieved data is expanded and displayed in an operator readable form. The device includes a hand-held housing for supporting its components. The stored compressed data may include service data identifying services and coupon data identifying discounts available for the services. The device relates the coupon data to the service data and includes a keyboard for inputting data identifying a desired service. The device retrieves and displays coupon data representing a discount available for the desired service. The device may be used in a system wherein a corresponding device is located at each of the services. The corresponding devices interface with the hand-held devices to discard coupon data when the coupon data is presented to receive the available discount. A data processing device for storing and retrieving coupon data as a function of service data without the use of data compression is also disclosed.

EP 0 612 019 A2

Notice

The subject matter of U.S. Patent Application Serial No. 07/676,818, filed March 28, 1991 and US Patent Application Serial No. 08/019/139, filed 18 February 1993, a copy of which is filed herewith, is hereby incorporated by reference.

Background of the Invention

The present invention relates to a data processing device and, in one form, to a data processing device for providing data related to the types of services and applicable discounts available at selected locations in response to operator input. The device is preferably hand-held and may be used within a system wherein a corresponding device is located at each service for interfacing with a hand-held device to monitor and control usage of discounts at the services. For applications involving large volumes of data, the data is stored and retrieved in a compressed form in the hand-held device and then expanded for display in a user readable form.

To determine what types of services and discounts are available in a location along a highway, for example, one has to either depend upon billboards along the highway or leave the highway in order to locate a specific type of service. It is not unusual that a motorist may leave the highway in an attempt to locate a particular gas station or food store only to find out later that a similar station or store was only a few miles down the highway. Additionally, maps are used to locate various types of services. However, the maps may be out of date or at best contain only limited information concerning the types of services available along the highway.

Various devices have been developed which provide information relating to services available along a highway. However, these devices require different interchangeable ROM (read only memory) packs or modules be used for either different highways or different states and most do not provide discount information. Further, since these devices are organized by highways or states, it is difficult to determine the nearest service to a border area or major intersection without frequently changing modules. This is because such devices are unable to identify services across borders. It would be advantageous to have a device which did not require separate modules to store information and changing modules when information concerning a different highway is required or when a motorist reaches a state border.

In addition to locating a service, there is also the question whether the service offers a discount coupon. Coupon books are commonly found; however, it is often difficult to locate a particular coupon for a particular service at the time of purchase. A coupon for a small business or chain franchise location is often lost among the myriad of available coupons. There is a need for a device which allows a particular coupon in a coupon book or collection of randomly sequenced coupons to be directly accessed through the user's location or through identification of a selected service so that a coupon for the selected service is highlighted to the user. Such a device could change the dynamics of the marketing decision as to whether it is economical for a small business to offer a discount in a coupon book. There is also a need for electronic storage of coupon data as a discount which can be retrieved and displayed at a selected service so that all of the usual paperwork and searching for paper coupons involved in presenting coupons for purchases is eliminated.

In addition to discount and service information, there are many situations where large volumes of data must be routinely accessed. Such applications include the data in a telephone book or encyclopedia and the vast data available relating to travel information, scientific information, manufacturing processes, service parts information, repair procedures, literature, geography, history, cultures, foreign languages, and the like. It would be advantageous to have a hand-held device which could store and retrieve large volumes of data quickly without the need for separate memory modules.

Summary of the Invention

Among the objects of the present invention is the provision of a data processing device which stores and retrieves data in a compressed form; the provision of a data processing device which compresses operator entered data for comparison with compressed data stored in the device; the provision of a data processing device which stores data related to the availability of discount coupons for use at selected services along a highway; the provision of a data processing device which stores data related to the availability of discount coupons for use at selected services; and the provision of a data processing device for providing data related to the availability of discounted services within a given location.

Generally, the present invention includes a data processing device having means for storing compressed data, a memory, means for entering input data in the memory, and means for compressing the input data. The device includes means for retrieving compressed data from the storing means as a function of the compressed input data and means for expanding the retrieved compressed data into a user readable form. The device also includes means for displaying the expanded data and a hand-held housing for supporting the components. The compressing means may comprise means for converting the input data into a coded number. The retrieved compressed data may include a coded number and the expanding means may comprise means for converting the coded number into a user readable form.

Another form of the invention is a data processing device for providing data related to the availability of discounted services within a given location. The device includes means for storing service data identifying the services available in various locations and coupon data identifying discounts available for various services. The device further includes means for relating the coupon data to the service data, a memory, and means for entering input data in the memory identifying a desired category of service and an origin position. The device also includes means for retrieving from the storing means service data representing one or more services having a location corresponding to the origin position and for retrieving from the storing means coupon data representing discounts applicable to the retrieved services and means for displaying the retrieved service data and the retrieved coupon data. The displaying means may further include means for displaying the coupon data as a discount and the device may further include means for associating a number with each discount representing the permitted number of uses of the discount, means for incrementing or decrementing the number for each discount when the discount is displayed to receive the related service, and means, responsive to the associating means, for preventing a discount from being displayed when the number associated with the discount is a predetermined number. The device may be used with a book of coupons corresponding to the discounts applicable to the services, wherein the storing means includes means for storing coupon data in the form of a coupon number identifying each of the coupons in the book, and wherein the retrieving means includes means for retrieving the coupon number for the coupon in the book applicable to the desired service.

Still another form of the invention is a data processing system for providing data related to the availability of discounted services within a given location. The system includes a plurality of hand-held devices, each having means for storing service data identifying the services available in various locations and coupon data identifying discounts available for various services, means for relating the coupon data to the service data, a memory, means for entering input data in the memory identifying a desired category of service and an origin position, means for retrieving from the storing means service data representing one or more services having a location corresponding to the origin position and for retrieving from the storing means coupon data representing discounts applicable to the retrieved services, and means for displaying the retrieved service data and the retrieved coupon data. The system further includes a plurality of corresponding devices, one located at each of the services, the corresponding devices each having means for interfacing with the hand-held devices and means for discarding from the storing means of a hand-held device connected to the interfacing means a coupon data related to the service.

Still another form of the invention is a data processing device for providing data related to the availability of discounts for selected services. The device includes means for storing service data identifying services and coupon data identifying discounts available for the services. The device further includes means for relating the coupon data to the service data, a memory and means for entering input data in the memory identifying a desired service. The device also has means for retrieving from the storing means coupon data representing a discount available for the desired service and means for displaying the retrieved coupon data. The displaying means may include means for displaying the retrieved coupon data as a discount and the device may further include means for associating a number with each discount representing the permitted number of uses of the discount, means for incrementing or decrementing the number for each discount when the discount is displayed to receive the desired service, and means, responsive to the associating means, for preventing a discount from being displayed when the number associated with the discount is a predetermined number. The device may be used with a book of coupons corresponding to the discounts applicable to the services, wherein the storing means includes means for storing coupon data in the form of a coupon number identifying each of the coupons in the book, and wherein the retrieving means includes means for retrieving the coupon number for the coupon in the book applicable to the desired service.

Yet still another form of the invention is a data processing system for providing coupons for discounted services. The system includes a plurality of hand-held devices, each having means for storing service data identifying services and coupon data identifying discounts available for the services, means for relating the coupon data to the service data, a memory, means for entering input data in the memory identifying a desired service, and means for retrieving coupon data representing a discount available for the desired service. The system also includes a plurality of corresponding devices, one located at each of the services, the corresponding devices each having means for interfacing with the hand-held devices and means for discarding from the storing means of a hand-held device connected to the interface means a coupon data related to the service.

Other objects and features will be in part apparent and in part pointed out hereinafter.

Brief Description of the Drawings

FIG.1 is a front view of a data processing device of the present invention;

FIG. 2 is a block diagram of the data processing device shown in FIG. 1;

FIGS. 3A-3D are a flow chart of a program of the invention for advancing to the exit table in the next state when the selected service is located in another state; and

FIG. 4 is a block diagram of a data processing device of the present invention.

Corresponding reference characters indicate corresponding parts throughout the several views of the drawings.

Detailed Description of the Preferred Embodiment

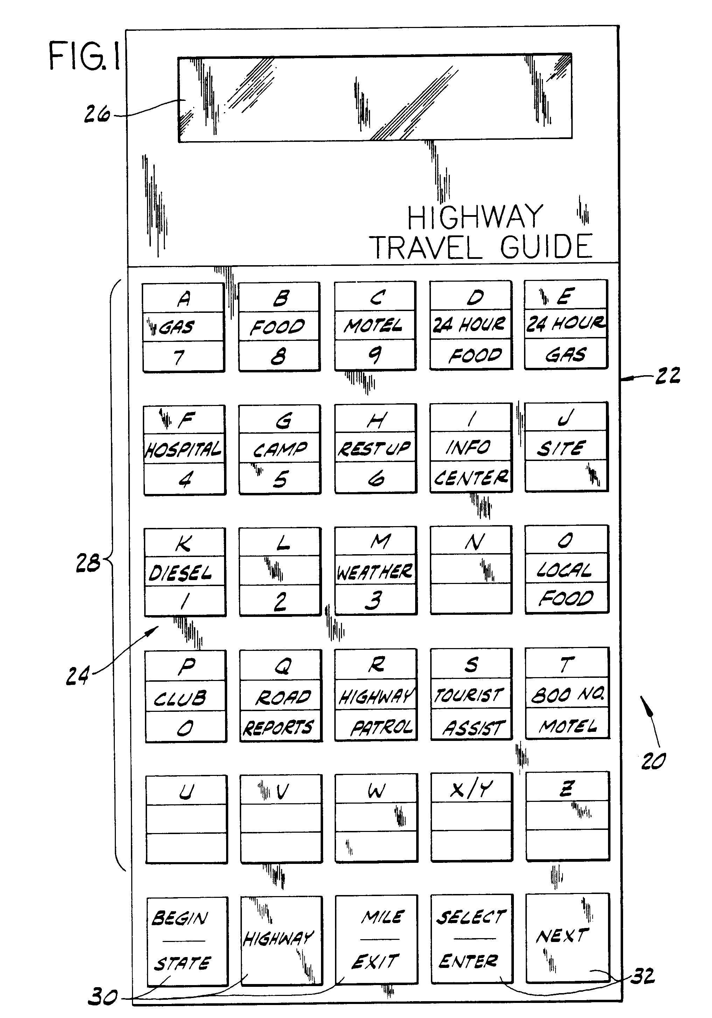

Referring now in particular to FIG. 1, a data processing device 20 is a hand-held unit having a housing 22 which includes a keyboard 24 and an alphanumeric display 26. The keyboard 24 includes alphanumeric keys 28, input function keys 30, and control keys 32. The alphanumeric keys 28 are also labeled with other information such as a particular category or type of service.

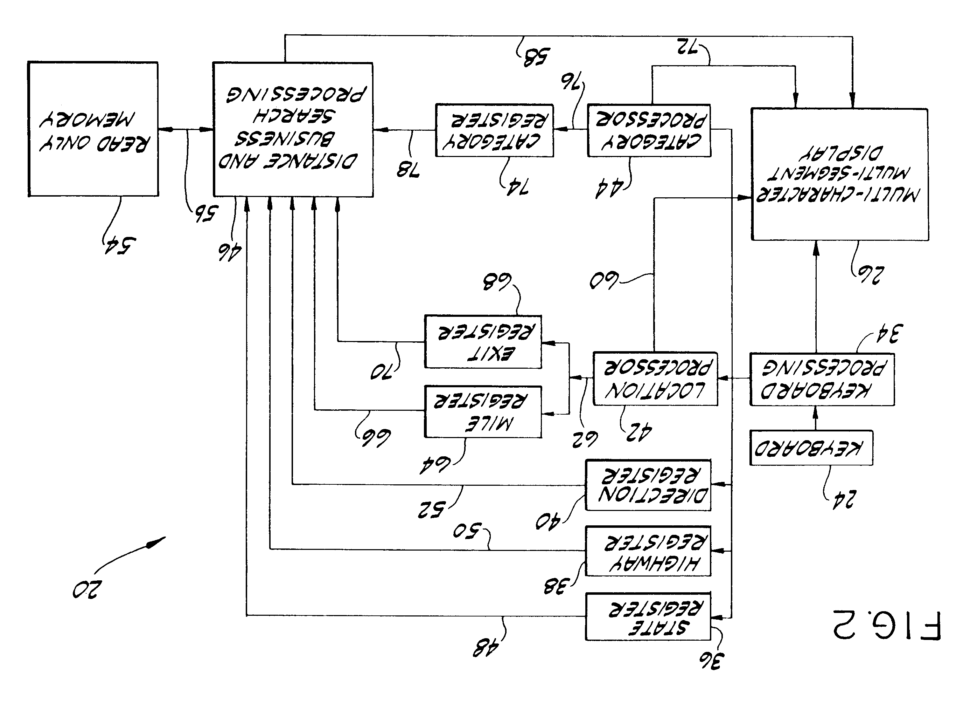

FIG. 2 illustrates a functional block diagram of the components of the device 20. The keyboard 24 is connected to a keyboard processor 34. The keyboard processor 34 periodically scans the keyboard to detect for the occurrence of a key depression. Upon detecting the depression of a key, the keyboard processor 34 reads in the key and provides this to both the display 26 and either a state register 36, a highway register 38, a direction register 40, a location processor 42, or a category processor 44. The state 36, the highway register 38, and the direction register 40 are connected to a microprocessor 46 via lines 48, 50, and 52, respectively. The microprocessor 46 which is particularly suitable for this invention is a NEC 7514, although there are a variety of other microprocessors which may be suitable for this invention if properly programmed and connected. The microprocessor 46 is connected to a read only memory (ROM) chip 54 via address lines 56. The ROM chip 54 is a one megabit ROM chip which is supplied by a number of chip manufacturers, such as Toshiba, NEC, and Sharp. Larger size ROM chips may be used to contain additional information. Alternatively, the predetermined data in ROM 54 and accessed by microprocessor 46 may be replaced by data stored in an EPROM, one-time programmable memory, flash memory or other similar storage device which can be accessed by microprocessor 46. The microprocessor 46 is also connected to the display 26 via line 58.

The location processor 42 is connected to the display 26 via line 60. If mileage information is entered from the keyboard 24, the location processor 42 provides this information over a line 62 to a mile register 64. The mile register 64 is connected to the microprocessor 46 line 66. If exit information is entered from the keyboard 24, the location processor 42 provides this information over line 62 to an exit register 68. The exit register 68 is connected to the microprocessor 46 via line 70.

The category processor 44 is connected to the display 26 via line 72. The category processor 44 provides category information entered from the keyboard 24 to a category register 74 via line 76. The category register 74 is connected to the microprocessor 46 via line 78.

In order to store in ROM 54 the large amount of data for the types of services and related coupons available at locations along the highway, the device 20 stores data in a compressed form. Data compression is implemented by use of numerous tables, pointers, and keywords. There are three major tables which are the keyword tables, the highway tables, and the exit tables. Each type of service has its own keyword table. There is a keyword table for each service listed on the keys 28 of the keyboard 24. For example, there are keyword tables for gas, food, and motels. Each keyword table contains a list of up to 63 different eight character names. Table I shows the keyword table for hotels. The first entry in the table is for HOLIDAY which represents Holiday Inn hotels, the second entry is for HOWARD for Howard Johnsons, and the last entry is for WESTIN. The numeral 255 represents that the end of the table has been reached.

TABLE I:  HOTEL KEYWORD TABLE, 8 bytes per entry

```
(H)(O)(L)(I)(D)(A)(Y)( ), first entry
(H)(O)(W)(A)(R)(D)( )( ), second entry
        .
        .
        .
(W)(E)(S)(T)(I)(N)( )( ), last entry
(255), end of table
```

The highway table contains a list of all the highways in each state. Data stored in the highway table consists of the two letter state abbreviation (2 bytes) and eight characters for the state name (8 bytes). This data represents a header for each state highway table. Each state highway table also includes four characters for the highway name (4 bytes), one byte describing the highway direction and compass heading for increasing mile/exit markers, the maximum mile marker and maximum exit number for the particular highway in the state (2 bytes), a pointer to an exit table for the highway (1 byte), and the numbers of states where the highway comes from and goes to (2 bytes). Each highway is completely described by using only 10 bytes. Table II shows the highway table for the first state listed.

TABLE II:  HIGHWAY TABLE

```
(A)(L)(A)(L)(A)(B)(A)(M)(A)( ), Alabama highways
(a)(b)(c)(d)(CODE-A)(lsb max. mile) (lsb ET pntr)(msb ET
pntr (entrance state#)(exit state#), first entry
(a)(b)(c)(d)(CODE-A)(lsb max. mile)(lsb ET pntr)(msb ET
pntr)(entrance state#)(exit state#), second entry
        .
        .
        .
(255), end of table
```

where (a)(b)(c)(d) is the name of the highway, and CODE-A has eight bits which are defined as follows: bit 7 represents the page for the exit table pointer, bits 4, 5, and 6 are spare, bits 2 and 3 represent the direction the operator is moving on the highway and Table IIa shows the direction designations, and bits 0 and 1 represent the most significant bits for the maximum mile marker in the state and the maximum mile marker is never greater than 999.

TABLE IIa

| bit 3 | bit 2: | Highway direction definition |
|-------|--------|------------------------------|
| 0 | 0: | Increasing North |
| 0 | 1: | Increasing South |
| 1 | 0: | Increasing East |
| 1 | 1: | Increasing West |

The exit table stores a four byte descriptor for each exit as well as two bytes for every service at each exit. For each service which offers a coupon, the exit table stores an additional two bytes representing the coupon reference number. For example, if there were 244 different highways in a state, there would be 244 different exit tables, one for each highway in the state. By use of pointers, each service is completely described by compressing information into two bytes. The four byte exit header contains data relating to the number of services at this exit and the preceding exit, the exit letter code (for example, Exit 12B), and the mile marker number and exit number associated with the exit. Table III is an example of an exit table.

## TABLE III:   EXIT TABLE

```
(CODE-B)(lsb exit#)(lsb mile#)(CODE-H), first exit on
highway
        (CODE-F)(CODE-G), first service
        (CODE-F)(CODE-G), second service
              .
              .
              .
        (CODE-F)(CODE-G), last service
(CODE-B)(lsb exit#)(lsb mile#)(CODE-H), second exit on
highway
              .
              .
              .
(255), end of table for particular highway
```

CODE-B includes bits 4, 5, 6, and 7 which represent the most significant bits for the number of services at the exit, bits 2 and 3 represent the most significant bits for the exit number (999 is the maximum), and bits 0 and 1 represent the most significant bits for the mile marker number (999 is the maximum). CODE-H includes bit 7 which represents the least significant bit for the number of services at the exit, bits 5 and 6 represent the exit letter, and bits 0, 1, 2, 3, and 4 represent the number of services at the preceding exit. Table IIIa shows the designations for the exit letter.

TABLE IIIa:

| Exit Letter | | |
| --- | --- | --- |
| bit 6 | bit 5: | Exit Letter |
| 0 | 0: | None |
| 0 | 1: | A |
| 1 | 0: | B |
| 1 | 1: | C |

The CODE-F and CODE-G bytes describe each service and the bytes contain the service type code number, the distance off the highway where the service is located, the direction off the highway, the reference number of any available coupon for the service, and the service keyword number (a pointer to the appropriate keyword table). Each service is described by using only two bytes. There are only a select list of possible choices in each service category. For example, the fast foods service category may only include Burger King, Wendy's, and McDonald's. It takes a limited number of bits to select a name rather than the amount of memory it would take to uniquely describe the name of the service each time. If there are 30 fast food chains, each keyword can be selected by using only 5 bits. Otherwise, it could take up to 1 byte for each alphanumeric character or as much as 64 bits for an 8 character display to describe the service. The compression of data by using keywords enables a greater amount of data to be stored in the ROM 54.

CODE-G includes bits 6 and 7 which represent which direction off the highway the service is located. Table IIIb shows the designations for the direction. Bits 0-5 represent either the direction off the highway where a rest area or information center is located or the name keyword number. Table IIIc shows the designations for the directions off the highway where a rest area or information center is located.

TABLE IIIb:

| Direction Off Highway | | |
|---|---|---|
| bit 7 | bit 6: | Direction Off Highway |
| 0 | 0: | N |
| 0 | 1: | S |
| 1 | 0: | E |
| 1 | 1: | W |

TABLE IIIc:  Direction of Rest Area

```
bit 5 bit 4 bit 3 bit 2 bit 1 bit 0:  Direction
   X     X     X     X     0     0  :  Not Allowed
   X     X     X     X     0     1  :  Northbound
```

only exit on a N/S highway or Eastbound only exit on a E/W highway

```
   X     X     X     X     1     0  :  Southbound
```

only exit on a N/S highway or Westbound only exit on a E/W highway

```
   X     X     X     X     1     1  :  Exit good
```

for N/S bound or E/W bound traffic

CODE-F includes bits 0-4 which represent the service type, bits 5-6 which represent the distance off the highway to where the service is located, and bit 7 which indicates whether the service has a coupon available for receiving a discount from the service. Table IIId shows the designation for the distance off the highway and coupon information for bits 5-7.

TABLE IIId:

| Distance and Coupon Information | | | |
|---|---|---|---|
| bit 7 | bit 6 | bit 5: | Distance off the highway |
| 0 | 0 | 0: | Zero miles, no coupon |
| 0 | 0 | 1: | One mile, no coupon |
| 0 | 1 | 0: | Two miles, no coupon |
| 0 | 1 | 1: | Four miles, no coupon |
| 1 | 0 | 0: | Zero miles, coupon available |
| 1 | 0 | 1: | One mile, coupon available |
| 1 | 1 | 0: | Two miles, coupon available |
| 1 | 1 | 1: | Four miles, coupon available |

If bit 7 indicates that a coupon is available for the service, then the next two succeeding byte pairs (CODE-F and CODE-G) represent the coupon reference number for identifying and locating the coupon in a book of coupons. CODE-F bits 0-3 represent the least significant binary coded decimal (BCD) digit of the coupon number. CODE-F bits 4-7 represent the BCD tens digit of the coupon number. CODE-G bits 0-3 represent the most significant BCD digit of the coupon number for coupon numbers extending up to 999. CODE-G bits 4-7 are spare bits, but can be used for the thousands digit if it is necessary to extend the coupon number up to 9999. The coupon data is thereby related to the service data.

Table IIIe shows a partial listing of the designations for the name of the service for bits 0-4.

TABLE IIIe:

| Service Name | | | | | |
|---|---|---|---|---|---|
| bit 4 | bit 3 | bit 2 | bit 1 | bit 0: | Service Name |
| 0 | 0 | 0 | 0 | 0: | Food |
| 0 | 0 | 0 | 0 | 1: | Gas |
| 0 | 0 | 0 | 1 | 0: | Hospital |
| 0 | 0 | 0 | 1 | 1: | Diesel |
| 1 | 1 | 1 | 1 | 1: | Special use - do not use |

Miscellaneous other tables are used to store related data, such as a keyword pointer table to identify where in the ROM each keyword table is located, a display code table which is used to convert the compressed display code bits into operator identifiable characters on the display 26. Additionally, there is a state number table where for example 0 represents the state of Alabama and 49 represents the state of Wyoming. There is also included telephone number/vicinity tables for such categories as road conditions and tourist assistance which include the telephone numbers the operator may need.

The ROM 54 is divided into pages with each page containing up to 64k bytes of data. All pointers to the memory locations in the ROM 54 include a page field to specify the particular 64k byte page where the data is located.

The microprocessor 46 includes a program for operating the device 20. In operation, the program is automatically initiated upon application of power to the device 20. Application of power also results in the device 20 being reset and the initialization of all registers. The unit at first is in a low power mode with the display 26 off. Periodically, the keyboard processor 34 scans the keyboard 24 to determine if begin/state key has been pressed. Upon the detection of a pressed begin/state key, the device 20 reads in the next two pressed keys as the state code, searches the ROM 54 for the state number and stores this number in the state register 36. Next, a list of the highways in the particular state selected is read from the ROM 54 and displayed. The operator selects the highway upon which information is to be requested. This highway number is stored in the highway register 38. The next key depression represents the direction being traveled and this is checked against data stored in the highway table in the ROM 54 to ensure consistency. The location processor 42 accepts either an exit number or a mile marker number which is entered by the operator via the keyboard 24. This data is stored in either the mile register 64 or the exit register 68 depending upon the type of data entered. Again, for consistency, the entered data is checked against data stored in the exit table in the ROM 54.

At this point, all location registers have been initialized and the device 20 is ready for the operator to request service information. The category processor 44 verifies that a valid service category has been requested. The service type code is stored in the category register 74. Once all the registers contain valid entries, the microprocessor 46 scans to the appropriate exit table in the ROM 54 to locate the requested service data. The program also includes the capability of switching to a new exit table when state boundaries are crossed.

A more detailed explanation of the program stored in the microprocessor 46 follows. The program is automatically initiated upon application of power to the device 20. A state counter register in the microprocessor 46 is initialized to 0. The display will read "STATE--" which prompts the operator to enter the two letter abbreviation for the state (for example, AZ for Arizona) in which information is to be requested. The program will then scan through the highway table to find a match. If a state is not found, then display 26 will read "ERROR", otherwise the state number will be stored in the state register 36. The program will then retrieve the next 8 characters from the highway table. The display 26 will show these 8 characters which corresponds to the state name (for example, ARIZONA). The program will wait 1 second and then display the HIGHWAY prompt. Once HIGHWAY is displayed, the operator presses the Highway key on the keyboard 24 to scroll through all the highways in the particular state selected. Pressing the Highway key causes the program to read the next four characters from the highway table which represents the name of the highway. The next six bytes of data in the highway table are also retrieved and stored in the microprocessor 46. This provides a pointer to the exit table for that highway. Scrolling is accomplished by pressing the Highway key until the desired highway is displayed. If the operator presses the Highway key, the next ten characters of data from the highway table are retrieved, displayed, and temporarily stored as above. When the operator scrolls to the desired highway, the Select key is pressed. As a result, the origin position of the operator has been input. Alternatively, the origin position may be input via a unit, such as a computer resident in a car, which communicates with a satellite providing position information.

The display 26 then shows "DIR -" to prompt the operator to enter which direction on the highway the operator is traveling. The operator may enter either E, W, N, or S for the direction. The program verifies that the highway actually runs in the direction selected. The direction code E, W, N, or S is displayed until the key depressed is released. The device 20 then prompts the operator to enter the mile marker number by displaying "MILE - - -" in display 26. The operator has the option of either entering the number of the nearest mile marker and then pressing the Select key or pressing the Mile/Exit key to enter the exit number and then pressing the Select key. If the mile marker number is entered, the device 20 verifies that the entered number is less than the maximum mileage number for the selected highway in the entered state. If not, an "INVALID" message is displayed. If the exit number is entered, the program searches through the selected highway's exit table to verify that the entered exit number is a valid exit number.

A pointer to the exit table was stored when the highway data was read from the highway table. The program uses this pointer to retrieve the first four bytes of data from the exit table. The first four bytes contain data related to the number of services at the current exit, the number of services at the preceding exit, the exit number for this exit, the mile marker number for this exit, and the exit number letter, if any. An exit number letter may be A, B, or C. If the current exit number does not match the entered exit number. then the program skips over the service data bytes for this exit and retrieves the next four bytes from the exit table. This process continues until an exit number match is found or until the end of the exit table is encountered. If no exit number match is found, then the message "NOT EXIT" is displayed.

The program then prompts the operator to select a service by displaying "CATEGORY" in the display 26. The operator selects a category. Each category key has three corresponding bytes of data stored in the ROM 54 starting at hexadecimal address 0003. The correct three bytes are found by multiplying the selected key code by 3 and adding to the 0003 address. These three bytes of data provide a pointer to the keyword tables and a service type code for the selected key. For example, if the operator selects the FOOD category key, the device displays "FOOD - -" prompt and the program is pointed to the keyword table for chain restaurants.

At this point, the operator has two choices on how to proceed. The operator can either press the Next key and the program will retrieve the name and location of the next restaurant along the highway, or enter alphabetic characters until a combination of letters has been entered which uniquely determines a restaurant name.

If the first choice is selected, the program determines whether the next exit mileage is greater than or equal to the entered mile marker number. If not, the program sequences through the highway's exit table until it finds such an exit. Service data follows the first four bytes of exit data. Each service is represented by a two byte code which provides the service type and name codes and data related to the direction off the highway, the distance from the exit, and whether a coupon is available for the service. When a coupon is available, the two next succeeding bytes identify the coupon reference number. The program sequences through the service data until it finds a service that matches the selected service type. If a match cannot be found for an exit, the program advances to the next exit and continues to search for the service type. This process continues until either a match is found, the highway ends, or 999 miles from the operator's entered location has been searched.

If a match is found, the program is pointed to the start of the keyword name table for the selected service type. This table contains 8 characters of the service name. The program reads through the table until the service name corresponding to the service name code is found. The service name is then displayed for 1 second. If a coupon is available for the service, an asterisk or other identifying symbol is displayed next to the service name. The program then calculates the distance to the service by subtracting the operator's entered mile marker number from the service exit mileage. This result is displayed along with the state abbreviation where the service is located for 1 second. These displays alternate until the Next key is pressed or until the Select key is pressed. If the Next key is pressed, the next service of the selected service type is found and displayed in the same manner as described above. If the Select key is pressed, the device 20 displays the exit number for the selected service for 1 second and then alternatively displays the direction off the highway the service is located and the distance off the highway the service is located. These displays are alternated until the Next key is pressed and the next service of the selected service is found and displayed. When a coupon is available for a selected service, the coupon reference number is alternatively displayed with the exit number and the direction/distance information.

If the operator decides to enter the name of a particular service, then the alphabetic keys are pressed. The display 26 blanks and the character is left justified in the display 26. The program then searches the service type keyword table to determine if one and only one service name begins with this letter. If no service name in the keyword table begins with this letter, the device displays "NO DATA" for 1 second and then displays the "CATEGORY" prompt again.

If one and only one service name in the keyword tables begins with the entered letter, this service name is displayed. The program continues in the same manner as above except that each service at an exit is checked to match the service name as well as the service type.

If more than one service name in the keyword table begins with the entered letter, the program waits until another letter is entered. This second letter is then displayed and the program searches in the same manner as in the case of the first entered letter. This process continues until a unique code is entered to select one service name from the keyword table.

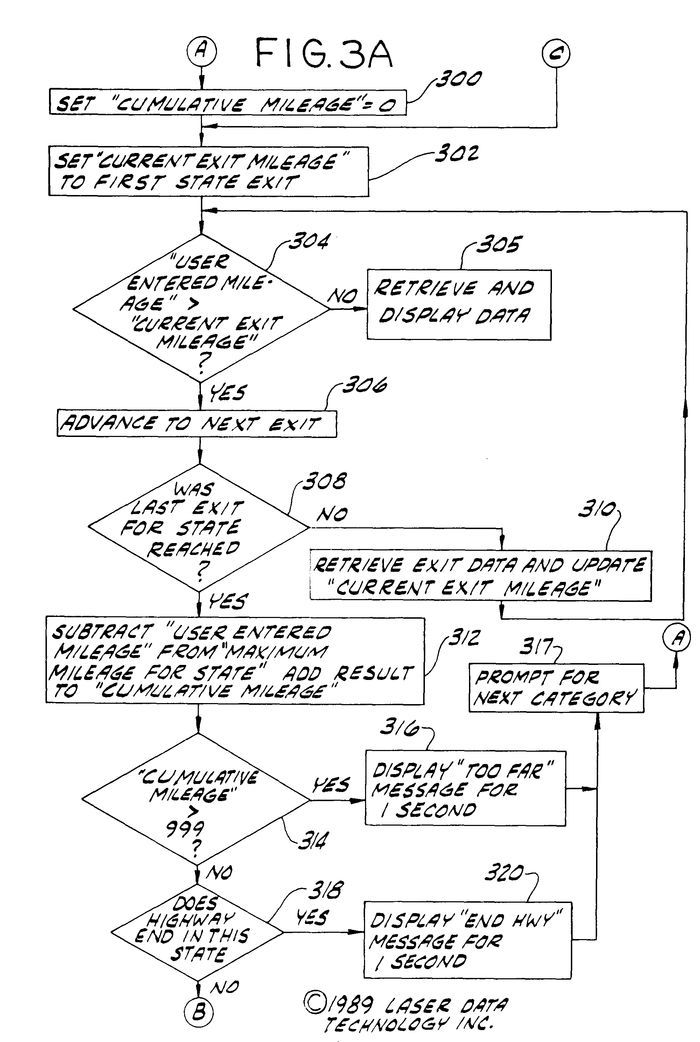

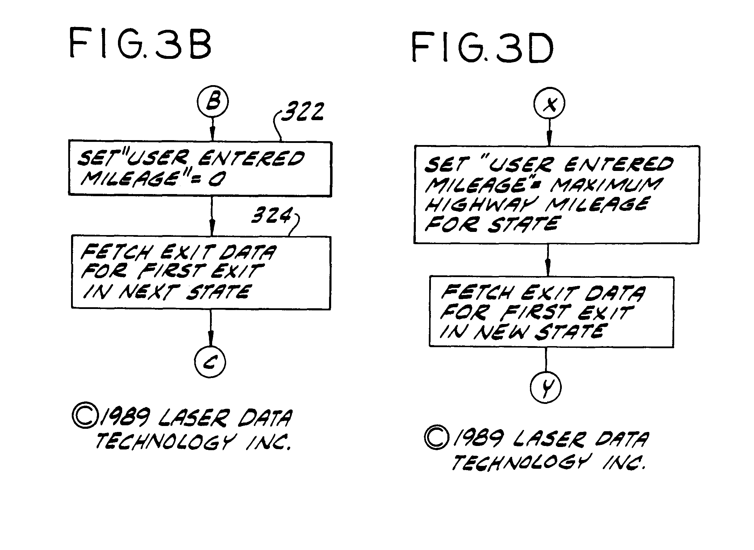

Referring now to FIGS. 3A and 3B, there is shown a flow chart of a program for advancing to the exit table in the next state when the selected service is located in another state. The program takes into account that the operator is travelling in a forward direction (successive mileage markers along the highway show increasing mileage). The program begins in a step 300 by setting a cumulative mileage register to zero. In a step 302 a current exit number register is set equal to the first exit's mileage marker number. In a next step 304 it is determined whether the operator entered mileage is greater than the current exit mileage. If no, then the program branches to a step 305 to process the category selected by retrieving and displaying data. The control of the program then loops back to entry selection. If yes, then the program continues to a step 306. In step 306 the program advances to the next exit. In a next step 308 it is determined whether the last exit for the state has been reached. If no, the program branches to a step 310 where the exit data is retrieved and the current exit mileage register is updated. The program then loops back to step 304.

If in step 308 it is determined that the last exit in the state has been reached, the program continues to a step 312. Since the last exit in the State has been reached, the operator has requested exit data in the contiguous state. The cumulative mileage register is set equal to the mileage at the boundary or border between the states less the operator entered initial location mileage. Within the second state, the distance from the operator's initial location to a desired exit is the exit's mileage plus the cumulative mileage register.

In a next step 314, it is determined whether the value in the cumulative mileage register is greater than 999. If it is, then the program branches to a step 316 where a "TOO FAR" message is displayed for 1 second in the display 26. The program, in a step 317, then prompts for a next category to be entered or selected by the operator. After a new category has been entered the program loops back to point A. If the cumulative mileage register is less than 999 then the program continues to a step 318. In step 318 it is determined whether the highway ends in the current state. If it does then the program branches to a step 320 where a "END HWY" message is displayed for 1 second. The program then prompts the operator for a next category to be entered or selected by the operator in step 317. If the highway does not end in the state, the program continues to a point B in FIG. 3B. At point B the program continues to a step 322. In step 322 a user entered mileage register is set to zero. The program continues to a step 324 where the exit data for the first exit in the next state is retrieved. The program continues to a point C which loops control of the program back to step 302 in FIG. 3A.

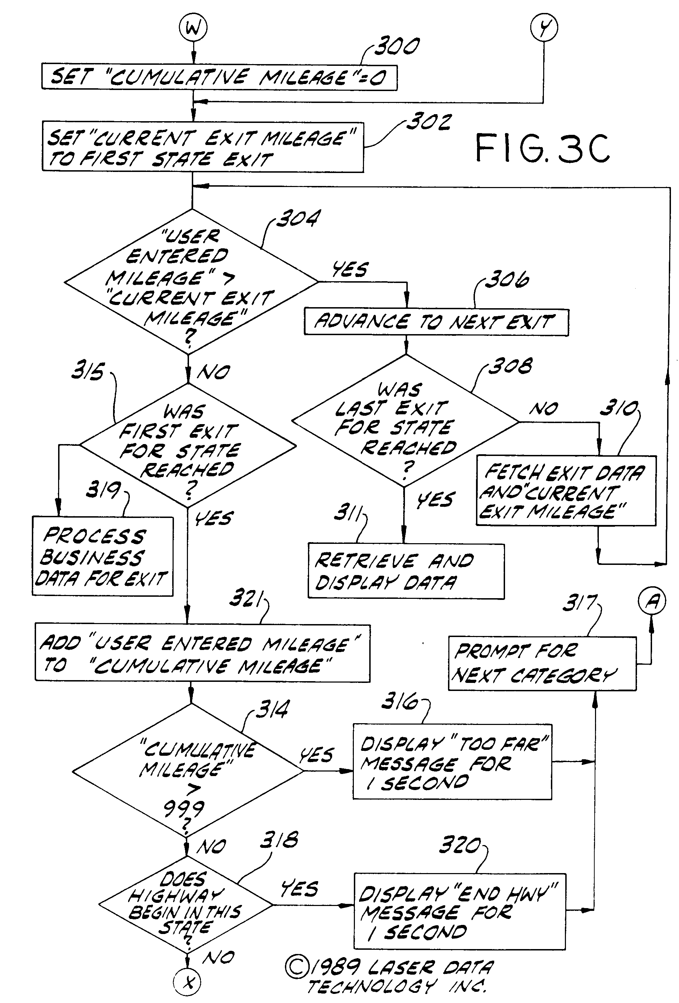

Referring now to FIGS. 3C and 3D, there is shown a flow chart of a program for advancing to the exit table in the next state when the selected service is located in another state. The program takes into account that the operator is travelling in a reverse direction (successive mileage markers along the highway show decreasing mileage). The program begins in a step 300 by setting a cumulative mileage register to zero. In a step 302 a current exit number register is set to the mileage marker number of the first exit. In a next step 304 it is determined whether the operator entered mileage is greater than the current exit mileage. If yes, then the program branches to a step 306. In step 306 the program advances to the next exit. In a next step 308 it is determined whether the last exit for the state has been reached. If no, the program branches to a step 310 where the exit data is retrieved and the current exit mileage register is updated. The program then loops back to step 304.

If in step 308 it is determined that the last exit in the state has been reached, the program branches to a step 311 to process the category selected by retrieving and displaying data. The control of the program then loops back to entry selection.

If in step 304 it is determined that the user entered mileage is not greater than the current exit mileage then the program branches to a step 315. In step 315 it is determined whether the first exit for the next step has been reached. If no, then the program branches to a step 319 to retrieve and display data for the exit. The control of the program then loops back to entry selection.

Since the first exit in the state has been reached, the operator has requested exit data in the next contiguous state and the program branches to a step 321. In step 321 the cumulative mileage register is set equal to the distance from the user location (origin position) to the boundary or border between the states.

In a next step 314, it is determined whether the value in the cumulative mileage register is greater than 999. If it is then the program branches to a step 316 where a "TOO FAR" message is displayed for 1 second in the display 26. The program, in a step 317, then prompts for a next category to be entered or selected by the operator. After a new category has been entered the program loops back to point W. If the cumulative mileage register is less than 999 then the program continues to a step 318. In step 318 it is determined whether the highway begins in the current state. If it does then the program branches to a step 320 where a "END HWY" message is displayed for 1 second. The program then prompts the operator for a next category to be entered or selected by the operator in step 317. If the highway does not begin in the state the program continues to a point X in FIG. 3D. At point X the program continues to a step 325. In step 325 a user entered mileage register is set to the maximum highway mileage for the state. The program continues to a step 324 where the exit data for the first exit in the next state is retrieved. The program continues to a point Y which loops control of the program back to step 302 in FIG. 3C.

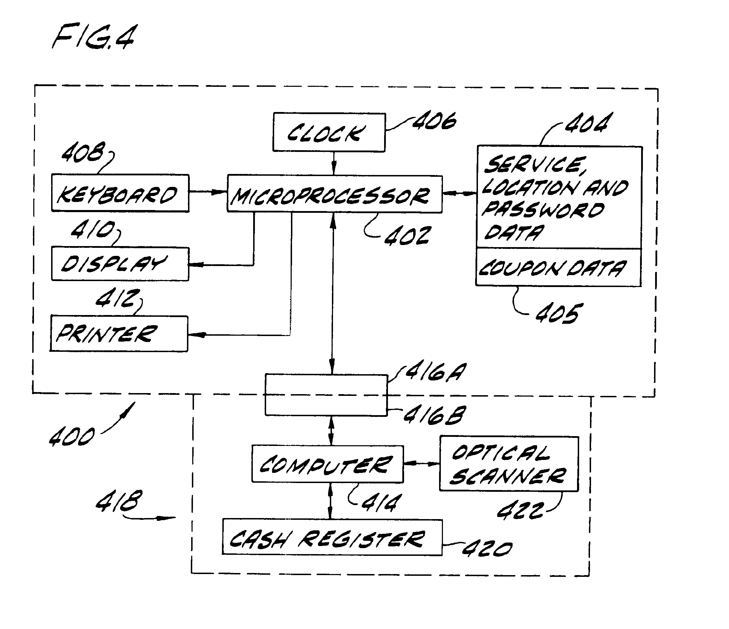

Referring now to FIG. 4, there is shown a block diagram of a hand-held unit 400 which electronically processes and displays discount information under the control of a microprocessor 402. The components of unit 400 are supported by a hand-held housing (not shown) similar to the housing 22 in Fig. 1. Unit 400 includes a memory 404 for storing the names and locations of restaurants, motels, service stations, and other services. Memory 404 also includes coupon data memory 405, which may be a part of memory 404, storing data identifying which of the services offer a discount, the amount of the discount, and the valid period of the discount. Memory 405 also stores a number associated with each discount representing the number of times the discount may be used. Unit 400 also includes a clock 406 so that discounts can be entered as a function of the time of day. Clock 406 also keeps track of the month so that different discounts can be set up to be valid during different months.

In use, the user inputs data identifying the name of a desired service. The data is input to microprocessor 402 via a keyboard 408, for example, through a data register found in the memory (not shown) contained within microprocessor 402. If the service is a national chain, microprocessor 402 will retrieve all national discounts applicable to the service from memory 405. If the service is a national chain but the discount is specific to a particular store of the chain, then the user inputs the name of the national chain plus an origin position corresponding to location information for the store and microprocessor 402 will retrieve all discounts applicable to the store from memory 405. If the service is a local shop, the user inputs the name and, again, microprocessor 402 retrieves all applicable discounts from memory 405. Alternatively, the user can input the name of a city, town, street or other location information for the origin position and a category of service and microprocessor 402 will retrieve from memory 404 all services having a location corresponding to the origin position. Microprocessor 402 then outputs the services for display on a display 410. In circumstances where more services are retrieved than can be displayed at one time, the user scrolls through the list by repeatedly pressing a "display" button (not shown) on keyboard 408. The user selects a service by pressing a "select" button (not shown) on keyboard 408. Microprocessor 402 then retrieves coupon data representing discounts applicable to the selected service, thereby relating the coupon data to the service data.

After discounts have been retrieved, microprocessor 402 outputs the discounts for display on a display 410. If more discounts have been retrieved than can be displayed at one time, the user scrolls through the list by repeatedly pressing the "display" button on keyboard 408. The user selects a discount by pressing the "select" button on keyboard 408. If the user decides to use one of the discounts, the user can display the discount to the attendant at the service. Likewise, the user can depress a print button (not shown) on keyboard 408 to cause a printer 412 to print the discount on paper in the form of a coupon.

After a single-use discount has been displayed or printed for credit on a purchase, microprocessor 402 discards it from memory. If the discount was printed by printer 412 in the form of a coupon, microprocessor 402 automatically discards it from memory 405. If the discount was received by displaying it to the service attendant on display 410, then the attendant enters a password for the service on keyboard 408. Microprocessor 402 checks the password against a password for the service stored in memory 404 and, if a match is found, discards the displayed discount from memory 405. Alternatively, the password may be entered from a computer 414 in a corresponding device 418 located at the service by connection through a pair of matching connectors 416A and 416B.

Memory 405 also stores multiple use discounts by associating a number with each discount representing the permitted number of uses of the discount. After a multiple use discount is printed, microprocessor 402 automatically decrements the number associated with the discount. If the discount was received by displaying it to the service attendant on display 410, then the attendant enters a password for the service as described above and, again, microprocessor 402 decrements the number associated with the discount. Likewise, when the password is entered by computer 414, microprocessor 402 decrements the number associated with the discount. After a given number reaches zero, microprocessor 402 discards the associated discount from memory 405. This prevents the discount from being displayed or printed any additional times. Alternatively, microprocessor 402 may increment a number after each coupon use to count the uses up to maximum, after which further discounts are unavailable.

In practice, microprocessor 402 discards a discount from memory 405 by either deleting it from memory 405 or by setting a disable signal associated with the discount in the random access memory ("RAM") portion of memory 405. When a discount is valid for only a limited period, for example the month of February or the morning hours of 9:00 a.m. to 12:00 p.m., a disable signal is stored in RAM associated with the discount. When the valid period begins, microprocessor 402 removes the disable condition until the end of the valid period. To prevent a user from resetting clock 406 to the valid period to thereby obtain discounts at other times, microprocessor 402 displays the time of day and month on display 410 so that the service attendant will know not to honor the discount other than during the valid period. When the discount is presented by connection to computer 414, the internal clock in computer 414 is used to check the valid period before honoring the discount. Microprocessor 402 thereby retrieves coupon data in the form of a discount as a function of the time of day information.

Preferably, coupon data memory 405 is a part of memory 404 which includes a read only memory ("ROM") section for storing the names and locations of restaurants, motels, service stations, and other services and information as to which of the services offer a discount, the amount of the discount, and the valid period of the discount. Memory 404 further includes a nonvolatile RAM section for storing the number of uses associated with the multiple use discounts, for storing the disable signals, and for storing the passwords for the services. Nonvolatile RAM or similar technology allows the power to be removed from the unit without change in the status of the counter which keeps track of the number of uses for multiple use discounts. The discount and service data is updated by replacing the ROM hardware (e.g., a memory chip) with updated ROM hardware. The data can also be updated by computer 414 through connectors 416A and 416B, for example, at the time a purchase is made at a service. Some other computer (not shown) provided by an update service, for example, can also be used to update the discount and service data in memory 404 through connectors 416A and 416B. When the discount and service updates are input from a computer, the ROM section of memory 404 should be implemented with RAM hardware.

When a computer is used to update memory 404, the computer sends an update signal to microprocessor 402 via matching connectors 416A and 416B. Some type of security commonly known to those skilled in the art, such as a password, is preferably implemented to prevent unauthorized updating. Microprocessor 402 responds to the update signal from the computer by enabling memory 404 to receive the updated data from the computer. The updated data is transmitted from the computer to microprocessor 402 and stored in memory 404 for use in future processing. After the updating is complete, microprocessor 402 turns off the update signal.

In addition to computer 414, corresponding device 418 may also include a cash register 420 for summing the amount due on products purchased by a purchaser and an optical scanner 422 for reading the identifying codes which commonly appear on products. Computer 414 thereby monitors the purchased products. Computer 414 also monitors the coupon data stored in the memory 404 of hand-held units 400 which data relates to the service where the particular corresponding device 418 is located. Computer 414 matches all available discounts identified by the coupon data with all applicable products identified for purchase through cash register 420 and/or optical scanner 422. Computer 414 transmits the available discounts to cash register 420 which deducts the value of the discounts from the amount due. Again, all single-use discounts are discarded from memory 404. When multiple use discounts are used, the number associated with the discounts is decremented as described above.

For applications where the quantity of discount and service data to be stored in memory 404 is too great for conventional storage apparatus, the data compression, searching and retrieval system described above for FIGS. 1 through 3D are used to expand the capacity of memory 404. Using this data compression system, the discount and service data are stored in memory 404 as coded numbers. Microprocessor 404 further codes the data input through keyboard 408 as coded numbers. Microprocessor 404 searches the coded numbers in memory 404 as a function of the coded numbers representing the input data to retrieve coded numbers corresponding to the desired discount and service data. Microprocessor 404 expands the retrieved coded numbers into a user readable form which is displayed on display 410.

In view of the above, it will be seen that the several objects of the invention are achieved and other advantageous results attained.

As various changes could be made in the above constructions without departing from the scope of the invention, it is intended that all matter contained in the above description or shown in the accompanying drawings shall be interpreted as illustrative and not in a limiting sense.

## Claims

1. A hand-held data processing device comprising means for storing compressed data, a memory, means for entering input data in the memory, and means for compressing the input data, the improvement comprising:
   means for retrieving compressed data from the storing means as a function of the compressed input data;
   means for expanding the retrieved compressed data into a user readable form; and
   means for displaying the expanded data.

2. The device of claim 1 wherein the retrieved compressed data includes a coded number and wherein the expanding means comprises means for converting the coded number into a user readable form.

3. A data processing device for providing data related to the availability of discounted services within a given location, the device comprising means for storing service data identifying the services available in various locations and coupon data identifying discounts available for various services, means for relating the coupon data to the service data, a memory, and means for entering input data in the memory identifying a desired category of service and an origin position, the improvement comprising:
   means for retrieving from the storing means service data representing one or more services having a location corresponding to the origin position and for retrieving from the storing means coupon data representing discounts applicable to the retrieved services; and
   means for displaying the retrieved service data and the retrieved coupon data.

4. The device of claim 3 further comprising a clock providing time of day information, wherein the storing means comprises means for storing the coupon data in the form of a discount as a function of time of day information, and wherein the retrieving means comprises means for retrieving the coupon data as a function of the time of day information.

5. The device of claims 3 or 4 wherein the displaying means further comprises means for displaying the coupon data as a discount and wherein the device further comprises means for associating a number with each discount representing the permitted number of uses of the discount, means for incrementing or decrementing the number for each discount when the discount is displayed to receive the related service, and means, responsive to the associating means, for preventing a discount from being displayed when the number associated with the discount is a predetermined number.

6. The device of claim 5 wherein the associating means further comprises means for inputting into the storing means a password as a function of a service, and wherein the incrementing or decrementing means is responsive to the entered password for incrementing or decrementing the number associated with the discount for the service.

7. The device of claims 3, 4, 5 or 6 wherein the displaying means further comprises means for displaying the coupon data as a discount and wherein the device further comprises means for discarding a particular coupon data from the storing means in response to the particular coupon data being retrieved from the storing means for the user to receive the discount.

8. The device of claim 4 wherein the displaying means comprises a printer for printing a coupon including the retrieved coupon data and means for discarding a particular coupon data from the storing means in response to the printer printing the particular coupon data.

9. The device of claim 3, 4, 5 or 6 further comprising:
   means for compressing the input data identifying the desired category of services and the origin position, wherein the service data and the coupon data in the storing means are stored in a compressed form, and wherein the retrieving means retrieves compressed service data and compressed coupon data as a function of the compressed input data; and

means for expanding the retrieved compressed service data and retrieved compressed coupon data into a user readable form, wherein the displaying means displays the expanded data.

10. The device of claim 3 for use with a book of coupons corresponding to the discounts applicable to the services, wherein the storing means comprises means for storing coupon data in the form of a coupon number identifying each of the coupons in the book, and wherein the retrieving means comprises means for retrieving the coupon number for the coupon in the book applicable to the desired service.

11. A data processing system for providing coupons for discounted services, the system including a plurality of hand-held devices, each comprising means for storing service data identifying services, and coupon data identifying discounts available for the services, means for relating the coupon data to the service data, a memory, and means for entering input data in the memory identifying a desired service, the improvement comprising:
   means for retrieving from the storing means coupon data representing a discount available for the desired service; and
   a plurality of corresponding devices, one located at each of the services, the corresponding devices comprising:
   means for interfacing with the hand-held devices; and
   means for discarding from the storing means of a hand-held device connected to the interface means a coupon data related to the service.

12. The system of claim 11 wherein the displaying means further comprises means for displaying the retrieved coupon data as a discount and wherein the hand-held devices further comprise means for associating a number with each discount representing the permitted number of uses of the discount, means for incrementing or decrementing the number for each discount when the discount is displayed to receive the desired service, and means, responsive to the associating means, for preventing a discount from being displayed when the number associated with the discount is a predetermined number.

13. The system of claims 11 or 12 wherein the displaying means further comprises means for displaying the retrieved coupon data as a discount and wherein the hand-held devices further comprise means for discarding a particular coupon data from the storing means in response to the particular coupon data being retrieved for the user to receive the discount.

14. The system of claims 11, 12 or 13 wherein the displaying means comprises a printer for printing a coupon including the retrieved coupon data.

15. The system of claim 11, 12, 13 or 14 wherein the hand-held devices further comprise:
   means for compressing the input data identifying the desired service, wherein the service data and the coupon data in the storing means are stored in a compressed form, and wherein the retrieving means retrieves compressed coupon data as a function of the compressed input data; and
   means for expanding the retrieved compressed coupon data into a user readable form, wherein the displaying means displays the expanded data.

16. The system of claims 11, 12, 13, 14 or 15 for use with a book of coupons corresponding to the discounts applicable to the services, wherein the storing means comprises means for storing coupon data in the form of a coupon number identifying each of the coupons in the book, and wherein the retrieving means comprises means for retrieving the coupon number for the coupon in the book applicable to the desired service.

17. The system of claims 11, 12, 13, 14, 15 or 16 wherein the corresponding devices further comprise means for providing updated data and wherein the hand-held devices further comprise means for receiving the provided updated data to update the data stored in the storing means.

18. The system of claims 11, 12, 13, 14, 15, 16 or 17 wherein the corresponding devices further comprise:
   a cash register for summing the amount due on products purchased by a purchaser;
   means for monitoring the coupon data stored in the storing means of the hand-held devices which data relates to the service where the particular corresponding device is located;
   means responsive to the monitoring means for matching all available discounts identified by the coupon data which are applicable to the purchased products; and

14

means responsive to the matching means for deducting the value of the available discounts from the amount due.

19. A data processing device for providing data related to the availability of discounts for selected services, the device comprising means for storing service data identifying services and coupon data identifying discounts available for the services, means for relating the coupon data to the service data, a memory, and means for entering input data in the memory identifying a desired service, the improvement comprising:

means for retrieving from the storing means coupon data representing a discount available for the desired service; and

means for displaying the retrieved coupon data.

FIG.1

HIGHWAY
TRAVEL GUIDE

| A GAS 7 | B FOOD 8 | C MOTEL 9 | D 24 HOUR FOOD | E 24 HOUR GAS |
|---|---|---|---|---|
| F HOSPITAL 4 | G CAMP 5 | H REST UP 6 | I INFO CENTER | J SITE |
| K DIESEL 1 | L 2 | M WEATHER 3 | N | O LOCAL FOOD |
| P CLUB 0 | Q ROAD REPORTS | R HIGHWAY PATROL | S TOURIST ASSIST | T 800 NO. MOTEL |
| U | V | W | X/Y | Z |
| BEGIN — STATE | HIGHWAY | MILE — EXIT | SELECT — ENTER | NEXT |

FIG. 2

EP 0 612 019 A2

# FIG. 3A

(A)        (C)

SET "CUMULATIVE MILEAGE" = 0    300

SET "CURRENT EXIT MILEAGE" TO FIRST STATE EXIT    302

304 — "USER ENTERED MILE-AGE" > "CURRENT EXIT MILEAGE" ?

— NO → RETRIEVE AND DISPLAY DATA    305

— YES

ADVANCE TO NEXT EXIT    306

308 — WAS LAST EXIT FOR STATE REACHED ?

— NO → RETRIEVE EXIT DATA AND UPDATE "CURRENT EXIT MILEAGE"    310

— YES

SUBTRACT "USER ENTERED MILEAGE" FROM "MAXIMUM MILEAGE FOR STATE" ADD RESULT TO "CUMULATIVE MILEAGE"    312

PROMPT FOR NEXT CATEGORY    317

(A)

314 — "CUMULATIVE MILEAGE" > 999 ?

— YES → DISPLAY "TOO FAR" MESSAGE FOR 1 SECOND    316

— NO

318 — DOES HIGHWAY END IN THIS STATE

— YES → DISPLAY "END HWY" MESSAGE FOR 1 SECOND    320

— NO

(B)

© 1989 LASER DATA TECHNOLOGY INC.

18

# FIG. 3B

(B)

322

SET "USER ENTERED
MILEAGE" = 0

324

FETCH EXIT DATA
FOR FIRST EXIT
IN NEXT STATE

(C)

©1989 LASER DATA
TECHNOLOGY INC.

# FIG. 3D

(X)

SET "USER ENTERED
MILEAGE" = MAXIMUM
HIGHWAY MILEAGE
FOR STATE

FETCH EXIT DATA
FOR FIRST EXIT
IN NEW STATE

(Y)

©1989 LASER DATA
TECHNOLOGY INC.

(W)

SET "CUMULATIVE MILEAGE"=0    *300*

(Y)

FIG. 3C

SET "CURRENT EXIT MILEAGE" TO FIRST STATE EXIT    *302*

*304* "USER ENTERED MILEAGE" > "CURRENT EXIT MILEAGE" ?

YES → ADVANCE TO NEXT EXIT    *306*

NO

*315* WAS FIRST EXIT FOR STATE REACHED ?

*308* WAS LAST EXIT FOR STATE REACHED ?

NO → *310* FETCH EXIT DATA AND "CURRENT EXIT MILEAGE"

YES

*319* PROCESS BUSINESS DATA FOR EXIT

*311* RETRIEVE AND DISPLAY DATA

ADD "USER ENTERED MILEAGE" TO "CUMULATIVE MILEAGE"    *321*

*317* PROMPT FOR NEXT CATEGORY    (A)

*314* "CUMULATIVE MILEAGE" > 999 ?

YES → *316* DISPLAY "TOO FAR" MESSAGE FOR 1 SECOND

NO

*318* DOES HIGHWAY BEGIN IN THIS STATE ?

YES → *320* DISPLAY "END HWY" MESSAGE FOR 1 SECOND

NO

(X)

© 1989 LASER DATA TECHNOLOGY INC.

FIG.4